Europäisches Patentamt

European Patent Office

Office européen des brevets

(11) Veröffentlichungsnummer: **0 512 228 A2**

# (12) EUROPÄISCHE PATENTANMELDUNG

(21) Anmeldenummer: **92104869.0**

(22) Anmeldetag: **20.03.92**

(51) Int. Cl.5: **F16D 13/68**

(30) Priorität: **04.05.91 DE 4114555**

(43) Veröffentlichungstag der Anmeldung:
**11.11.92 Patentblatt 92/46**

(84) Benannte Vertragsstaaten:
**CH DE ES FR GB IT LI NL SE**

(71) Anmelder: **MAN NUTZFAHRZEUGE AG**
**Münchner Strasse 667 ,Postfach 50 06 20**
**W-8000 München 50(DE)**

(72) Erfinder: **Kraemer, George-Peter, Dipl.-Ing.**
**Hackenängerstrasse 24**
**W-8060 Dachau(DE)**
Erfinder: **Kozel, Peter, Dipl.-Ing.**
**Lerchenstrasse 8**
**W-8063 Odelzhausen(DE)**

(54) **Torsionsdämpferkupplung zwischen Motor und Schaltgetriebe in einem Nutzfahrzeug.**

(57) Zwischen dem Motor (1) und dem Gangschaltgetriebe (2) eines Nutzfahrzeuges ist eine Torsionsdämpferkupplung (3) angeordnet. Die Torsionsdämpferkupplung (3) weist einen Vordämpfer (4) und einen Hauptdämpfer (5) auf. Diese sind in einer einzigen Torsionsdämpferstufe (8) integriert. Der Hauptdämpfer (5) umfaßt zwei Hauptdämpferstufen (6, 7) mit unterschiedlichen Drehelastizitäten.

Fig 1

EP 0 512 228 A2

Rank Xerox (UK) Business Services

Die Erfindung bezieht sich auf eine Torsionsdämpferkupplung zwischen Motor und Schaltgetriebe eines Nutzfahrzeuges.

Derartige Torsionsdämpferkupplungen sind in Zweistufenanordnung bekannt. Dabei ist die erste Stufe als Vordämpfer definiert und unabhängig von der zweiten Stufe, dem Fahrdämpfer. Beide Stufen sind in Reihe zueinander geschaltet. Der Vordämpfer dient der Entkopplung von Motor und Getriebe im Leerlauf. Der Fahrdämpfer überträgt die Leistung im Zug- oder Schubbetrieb. Der Fahrdämpfer kann zur Beherrschung instationärer Zustände mit einer Reibdämpfungseinrichtung versehen sein.

Bei Nutzfahrzeugen, insbesondere wenn sie mit einem 5-Zylinder-Dieselmotor in Verbindung mit einem mehrstufigen Schaltgetriebe ausgerüstet sind, stellt sich das Problem höherer dynamischer Beanspruchung; es liegt eine größere akustische Empfindlichkeit des Fahrzeugantriebes durch höhere Motorisierung bei niedrigeren Motordrehzahlen und gleichzeitiger Leichtbauweise vor. Damit ergibt sich ein schmaler Betriebsdrehzahlbereich, der zur Anregung relativ niedriger Frequenzen von ca. 30 bis 100 Hz führt. In diesem Bereich wird das Nutzfahrzeug zu Brummen und Dröhnen unter Last angeregt, wie auch Getrieberasseln und Losradklappern im stationären oder instationären Fahrbetrieb auftreten kann.

Der Erfindung liegt die Aufgabe zugrunde, die vorerwähnten Nachteile zu beseitigen.

Dies wird erfindungsgemäß dadurch erreicht, daß die Torsionsdämpferkupplung einen Vordämpfer und einen Hauptdämpfer mit einer ersten und einer zweiten Hauptdämpferstufe aufweist, wobei beide Hauptdämpferstufen in einer einzigen Torsionsdämpferscheibe integriert sind und weiterhin die erste und die zweite Hauptdämpferstufe unterschiedliche Drehelastizitäten aufweisen. Die erfindungsgemäße Torsionsdämpferkupplung dient sowohl der Schwingungsisolierung als auch der Leistungsübertragung. Die bisher in Nutzfahrzeugen eingesetzten konventionellen ein- oder zweistufigen Torsionsdämpferkupplungen haben den Nachteil, daß durch den begrenzten Bauraum und aus Festigkeitsgründen die Federkonstanten nicht beliebig herabgesetzt werden können, um einen für das Getriebe resonanzüberkritischen Betrieb sicherzustellen. Die Vordämpferstufe gemäß der Erfindung dient der Entkopplung von Motor und Getriebe im Leerlauf und eliminiert oder reduziert Geräusche während des Leerlaufes. Der Fahrdämpfer oder die Hauptdämpferstufe überträgt die Leistung im Zug- oder Schubbetrieb. Die beiden in einer einzigen Torsionsdämpferscheibe integrierten Hauptdämpferstufen verbinden die motorseitige Rotationsträgheit mit der getriebeseitigen Rotationsträgheit über jeweils unterschiedliche Drehelastizitäten. Sie können vorteilhafterweise noch von einer zusätzlichen Reibungsdämpfung überlagert werden. Die Auslegung der ersten Hauptdämpferstufe hängt ab vom Motorbremsmoment bei geöffneter Drosselklappe und Motordrehzahlen kleiner als 1300 (1/min), dem Getriebeschleppmoment, den beteiligten Rotationsträgheiten, Dämpfungen, Spielen und Drehelastizitäten des Antriebsstranges. Es hat sich in umfangreichen Berechnungen und Versuchen gezeigt, daß für die erste Hauptdämpferstufe ein Drehwinkelbereich von 1,0° bis 2,5° optimal ist. Die Federkonstante wird so bestimmt, daß der Betrieb bei Motordrehzahlen von 700 bis 1200 (1/min) und Schubbetrieb mit geöffneter Drosselklappe überkritisch erfolgt. Die zweite Hauptdämpferstufe deckt den Hauptbetriebsbereich. Ihre Auslegung erfolgt nach bekannten Regeln. Für die dreistufige Kupplung ist hier eine Federkonstante anzustreben, die einen überkritischen Betrieb im Drehzahlbereich von mehr als 1100 (1/min) gewährleistet.

Der Vordämpfer wird nach bekannten Regeln ausgelegt und garantiert ein freies Schwingen im Leerlaufbetrieb, der deutlich überkritisch stattfindet. Ein gutes Lastwechselverhalten ergibt sich insbesondere dann, wenn der Vordämpfer asymmetrisch ausgelegt wird, d.h. ein geringerer Winkel im Schubbereich als im Zugbereich zur Verfügung steht.

Gesamtheitlich gesehen bewirkt die Erfindung, daß Getrieberasseln und Losradklappern des mehrstufigen Getriebes im leichten Schubbetrieb stark reduziert wird, so daß für den Fahrer und die Umwelt wesentliche Geräusche nicht mehr wahrzunehmen sind. Darüber hinaus ist die dreistufige Kupplung in jedem Nutzfahrzeug ohne Bauraumbeschränkung einsetzbar und ist wesentlich kostengünstiger als ein alternativ einzusetzendes Zweimassen-schwungrad.

Die Unteransprüche zeigen eine vorteilhafte Detaillierung der erfinderischen Einrichtung auf.

Die Erfindung ist in einem Ausführungsbeispiel dargestellt.

Es zeigen:

Fig. 1    einen Querschnitt durch eine Torsionsdämpferkupplung,

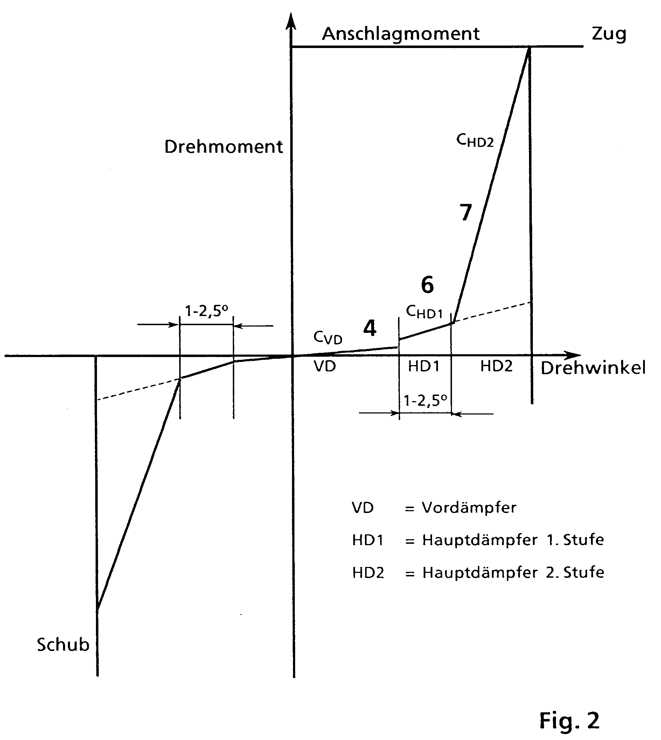

Fig. 2    das Drehmoment Drehwinkel-Diagramm der Kupplung.

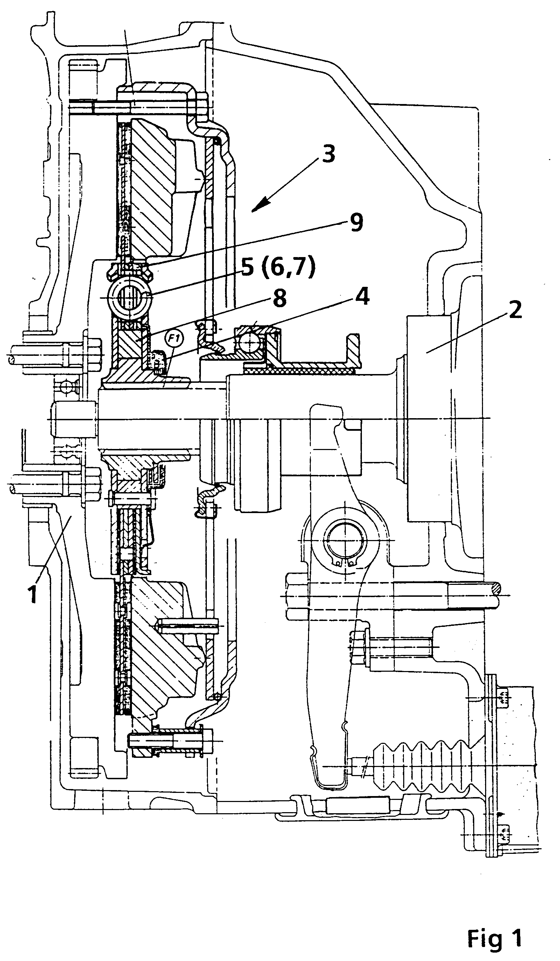

Fig. 1 zeigt eine zwischen Motor 1 und Gangschaltgetriebe 2 angeordnete Torsionsdämpferkupplung 3. Diese weist einen Vordämpfer 4 und einen Hauptdämpfer 5 auf, der die beiden Hauptdämpferstufen 6 und 7 aufnimmt. Der Vordämpfer kann symmetrisch oder asymmetrisch ausgelegt werden. Die Hauptdämpferstufen 6 und 7 sind in einer einzigen Torsionsdämpferscheibe 8 integriert, wobei die Drehelastizität über in den Fenstern der Torsionsdämpferscheibe 8 angeordneten Druckfedern erfolgt. Den Hauptdämpferstufen 6 und 7 kann noch ein weiterer Reibungsdämpfer 9 überlagert werden.

Bezugszeichenliste

1    Motor
2    Gangschaltgetriebe
3    Torsionsdämpferkupplung
4    Vordämpfer
5    Hauptdämpfer
6    Hauptdämpferstufe 1
7    Hauptdämpferstufe 2
8    Torsionsdämpferscheibe 9
9    Reibdämpfungseinrichtung

**Patentansprüche**

1. Torsionsdämpferkupplung zwischen Motor und Gangschaltgetriebe eines Nutzfahrzeuges, dadurch gekennzeichnet, daß die Tortionsdämpferkupplung (3) einen Vordämpfer (4) und einen Hauptdämpfer (5) mit einer ersten (6) und einer zweiten Hauptdämpferstufe (7) aufweist, wobei beide Hauptdämpferstufen (6, 7) in einer einzigen Torsionsdämpferscheibe (8) integriert sind.

2. Torsionsdämpferkupplung nach Anspruch 1, dadurch gekennzeichnet, daß die erste (6) und die zweite Hauptdämpferstufe (7) unterschiedliche Drehelastizitäten aufweisen.

3. Torsionsdämpferkupplung nach Anspruch 1 oder 2, dadurch gekennzeichnet, daß der Drehwinkelbereich der ersten Hauptdämpferstufe 1,0° bis 2,5° beträgt.

4. Torsionsdämpferkupplung nach den Ansprüchen 1 bis 3, dadurch gekennzeichnet, daß die Federkonstante in der ersten Hauptdämpferstufe (6) derart ausgelegt ist, daß sie im Drehzahlbereich von > 700 U/min einen überkritischen Betrieb gewährleistet.

5. Torsionsdämpferkupplung nach einem oder mehreren der Ansprüche 1 bis 4, dadurch gekennzeichnet, daß dem Hauptdämpfer (5) eine zusätzliche Reib-Dämpfungseinrichtung (9) überlagert ist, die für Schub und Zug getrennt voneinander einstellbar ist.

6. Torsionsdämpferkupplung nach einem oder mehreren der Ansprüche 1 bis 5, dadurch gekennzeichnet, daß der Vordämpfer (4) symmetrisch oder asymmetrisch ausbildbar ist.

EP 0 512 228 A2

Fig 1

4

Fig. 2